# EUROPEAN PATENT SPECIFICATION

(11) **EP 4 235 056 B1**
(45) Date of publication and mention of the grant of the patent: **22.07.2026**
(21) Application number: 23182055.6
(22) Date of filing: 11.01.2017
(51) Int. Cl.: C12C 13/00, C12C 3/00, C12C 5/02, C12C 7/00, C12C 11/02, C12C 12/00, F25B 30/02, C12C 5/00, C12C 3/04, C12C 13/10

(54) **BEER PRODUCTION APPARATUS**
VORRICHTUNG ZUR HERSTELLUNG VON BIER
APPAREIL DE PRODUCTION DE BIÈRE

(30) Priority: 19.01.2016 KR 20160006450
(43) Date of publication of application: 30.08.2023
(62) Divisional of application: 17741611.2
(73) Proprietor: LG Electronics Inc., Yeongdeungpo-gu Seoul 07336 (KR)
(72) Inventor: Jeong, Changhun, 08592 Seoul (KR); Lee, Wonseck, 08592 Seoul (KR); Park, Sunyoung, 08592 Seoul (KR); Kim, Heeyeon, 08592 Seoul (KR)
(74) Representative: Ter Meer Steinmeister & Partner

(56) References cited:
- US-A- 6 032 571
- US-A1- 2014 103 066
- US-B1- 9 102 908

## Description

### TECHNICAL FIELD

The present invention relates to a beer maker.

### BACKGROUND ART

Users conventionally purchased ready-made articles at selling houses such as stores and then drank them, but have drunk house beers or handmade beers brewed by fermenting materials of beer in households or bars.

More various kinds of house beers that users brew by directly fermenting beer materials may be brewed as compared with conventional ready-made articles. The users can drink beers suitable for their tastes.

Such house beers are not required for users to inject separate food additives necessary for brewing into the house beers, and the users can drink relatively inexpensive premium beers through best materials.

For this reason, while only experts conventionally brewed house beers through materials of beer, demand of general public to brew house beers has increased.

Materials required to brew beer may include water, germinated barley, wort brewed through hops, yeast for fermenting the wort, aroma for allowing taste and flavor of the wort to be enriched in a wort fermenting process, and the like.

The materials required to brew the beer will be described. The wort is brewed by boiling malt, water, and hops for 5 hours to 7 hours. The wort is a material that becomes a basic material of the beer.

The yeast may be called as leaven, and is injected into the wort to ferment the wort and generate alcohol and carbonic acid, thereby forming a main material of the beer.

The aroma provides distinct taste and flavor to fermented beer and satisfies taste of a user. Various kinds of aroma may be provided according to tastes of users. For example, the aroma may be a beer additive such as fruit, syrup, or vanilla beans.

A process of brewing the beer through the above-described materials may generally include a total of three steps, i.e., a wort producing step, a fermenting step, and a ripening step. Beers may be classified into ale and larger beers.

The ale beer is a beer that has a strong bitter taste, a small amount of carbonic acid, a strong fruit flavor, and a deep taste.

The larger beer is a beer that has a feeling of fine and cool refreshment because it has a fruit flavor weak as compared with the ale beer but has a large amount of carbonic acid.

The term required to brew house beer takes two weeks to three weeks from the wort producing step to the ripening step.

The wort producing step is a step of producing wort by boiling, for 5 hours to 7 hours, malt obtained by steeping barley in water, water, and hops that provide bitter taste and flavor to the wort.

The fermenting step may be divided into a primary fermenting step and a secondary fermenting step. The primary fermenting step is a step of generating alcohol and carbonic acid by adding yeast to the wort.

The secondary fermenting step is a step of enriching flavor and taste of the wort by adding sugar and aroma to the wort of which fermentation is performed.

Since the yeast continuously ferment the wort even in the secondary fermenting step, carbonic acid is continuously collected.

Accordingly, the wort is changed into wort containing a large amount of carbonic acid.

As for the ale beer, the primary and secondary fermenting steps are performed at 19 to 25 °C. As for the larger beer, the primary and secondary fermenting steps are performed at 7 to 13 °C.

The ale beer and the larger beer may have different wort fermentation temperatures and different carbonic acid amounts.

If the fermenting step is completed, the beer is drinkable. In addition, the ripening step may be performed so as to drink beer containing more rich taste and flavor.

The ripening step is a step of completing the brewing of the beer by adding additional hops to the beer to maintain a constant temperature for one week or two weeks.

The above-described steps are performed to brew house beer. This means that a long time and a complicated process should be required to brew the beer.

Therefore, customers of general house beers should directly purchase materials one by one so as to ferment beer, and directly ferment the materials in sequence.

In addition, since it is difficult to properly maintain a content of materials, a recipe, a temperature, a pressure, and the like, it is highly likely that beer brewing will fail.

US 6 032 571 A presents an automated home beer brewing machine and method for making beer in a single vessel under automatic control. The single-vessel automated brewing operation allows the user to load ingredients, conduct a grain-steeping if desired, and then automatically carries out the rest of the brewing process in a single vessel, until summoning the user days later to sugar-prime and bottle the beer. The machine includes a removable ingredients-dispensing turn table assembly, the turn table assembly having four ingredient cups. The user places the turn table assembly on the housing, adds hops and yeast to the appropriate cups, and places these cups in their locations in the turn table. The cups with the turn table are rotated. During this incremental rotation of the turn table, one of the cups passes over dispensing aperture. In order to effect dispensing of the contents of this cup as it passes over the aperture, the cover carries on its underside an arcuate gear rack section. The rotational position of the gear rack section is such that the cup achieves inversion thus dispensing its content of ingredient for beer wort.

US 9 102 908 B1 present a beer making device having removable reservoirs through which brewing ingredients are added. A removable tub contains the various reservoirs, and some or all of the various ingredient reservoirs are removable from the reservoir tub.

US 2014/103066 A1 discloses a container for storing a liquid foodstuff and dispensing it under pressure.

### DISCLOSURE OF THE INVENTION

### TECHNICAL PROBLEM

An embodiment of the present invention provides a beer maker capable of simply brewing beer by injecting a capsule containing water and materials therein.

Also, an embodiment of the present invention provides a beer maker capable of brewing beer using a capsule containing materials of the beer without user's directly purchasing separate beer materials.

Also, an embodiment of the present invention provides a beer maker in which beer is completely brewed by injecting only a capsule without user's controlling a mixing ratio of beer materials.

Also, an embodiment of the present invention provides a beer maker in which the entire process of brewing beer by injecting a capsule into the beer maker is automated, so that any additional action of a user is not required.

Also, an embodiment of the present invention provides a beer maker capable of minimizing additional cleansing or sterilization by replacing only a capsule containing materials and an accommodating apparatus in which fermentation is completed after beer brewing is completed.

### TECHNICAL SOLUTION

The invention is set out by the features of the independent claim.

There is provided a beer maker including: a container including an opening, the container providing a storage space; an accommodating apparatus attachably/detachably provided in the storage space through the opening, the accommodating apparatus providing a space in which wort is stored; a capsule mounting part communicating with the accommodating apparatus; and a capsule attachably/detachably provided in the capsule mounting part, the capsule accommodating materials therein, wherein the capsule includes a yeast capsule supplying yeast to the accommodating apparatus.

The capsule may include a wort capsule supplying the wort to the accommodating apparatus.

The accommodating apparatus is for accommodating the wort.

The capsule may further include: a hop capsule supplying hop to the accommodating apparatus; and an aroma capsule supplying aroma that adds flavor to the wort.

The beer maker further includes: a water supply flow path through which water is supplied to the capsule mounting part; a supply flow path through which water introduced into the capsule is supplied together with the materials accommodated in the capsule to the accommodating apparatus; and a drinking flow path provided to discharge beer of the accommodating apparatus to the outside of the container.

A supply valve opening/closing the supply flow path may be provided in the supply flow path. A drinking valve controlling a flow rate of the beer discharged from the accommodating apparatus may be provided in the drinking flow path.

The beer maker further includes: a pressurization flow path connected to the container; a first air pump pressurizing the accommodating apparatus by supplying air between the container and the accommodating apparatus through the pressurization flow path; and may include an air injection flow path connected to the accommodating apparatus to inject air into the accommodating apparatus; and a second air pump connected to the air injection flow path to inject air into the accommodating apparatus.

A pressurizing valve controlling a flow rate of the air supplied to the container may be provided in the pressurization flow path. An air injection valve controlling a flow rate of the air supplied to the accommodating apparatus may be provided in the air injection flow path.

The beer maker further includes a discharge flow path through which gas generated from the accommodating apparatus in a beer brewing process is discharged.

A discharge flow path controlling a flow rate of the gas discharged from the accommodating apparatus may be provided in the discharge flow path.

The beer maker may further include a sealing body attachably/detachably provided in the opening to seal the opening. A through-hole connected to the supply flow path and a discharge hole connected to the discharge flow path may be formed in the sealing body.

The accommodating apparatus may include: a stopper part having a flow hole communicating with the through-hole and an exhaust hole communicating with the discharge hole; and a storage part connected to the stopper part, the storage part having a space in which the wort is accommodated, the storage part having a changeable volume.

The accommodating apparatus may further include an accommodating body part coupled to the stopper part, the accommodating body part having a space in which the storage part is accommodated.

The accommodating apparatus may further include an injection tube communicating with the flow hole, the injection tube extending to the inside of the storage part.

The injection tube may be made of a soft material such that, although the volume of the storage part is changed, a lower end of the injection part is always disposed at a lower portion of the storage part.

A supporting part may protrude from the inner circumferential surface of the opening. The stopper part may include a mounting part mounted on the supporting part at the outer circumferential surface thereof. If the accommodating apparatus is inserted into the container, the mounting part may be supported by the supporting part.

The sealing body may include: an upper body opening/closing the opening; a lower body provided to be spaced apart from the upper body to be in contact with the stopper part; and at least one elastic part capable of controlling a spacing distance between the upper body and the lower body, wherein the lower body is adhered closely to the stopper part to be in contact with the stopper part.

The beer maker may further include a sealing member sealing between the lower body and the opening.

The capsule mounting part may include: a capsule mounting groove having the capsule mounted therein; a capsule cover opening/closing the capsule mounting groove, the capsule cover communicating with the water supply flow path; a pressurizing part provided at the capsule cover, the pressurizing part pressurizing the capsule when the capsule cover covers the capsule; and a supply tube communicating with the supply flow path by passing through a lower portion of the capsule mounting groove.

The beer maker may further include: a fermenting container provided with a heat insulating member accommodating the container therein; and a refrigeration cycle controlling a temperature of the container. The refrigeration cycle may further include a compressor, a first heat exchanger, an expansion device, and a second heat exchanger, through which a refrigerant is circulated. Any one of the first heat exchanger and the second heat exchanger may be provided to the fermenting container.

### ADVANTAGEOUS EFFECTS

According to the present invention, if only water and a capsule are injected, the preparation of beer materials is completed, thereby maximizing user's convenience.

According to the present invention, a complicated beer brewing process is automated, so that beer can be simply brewed without any additional manipulation during beer brewing.

According to the present invention, a user can brew various beers by selecting various capsules, so that tastes of users can be considered.

According to the present invention, after the beer brewing is completed, only the capsule is replaced to be immediately reused, thereby an additional cleansing or sterilizing process.

According to the present invention, although the user does not understand or acquaint the beer brewing process, the user can perform the entire process of beer brewing, thereby drinking beer.

### BRIEF DESCRIPTION OF THE DRAWINGS

FIG. 1 is a configuration view illustrating a beer maker according to an embodiment of the present invention.
FIG. 2 is a view illustrating that beer materials are accommodated in a capsule and an accommodating apparatus according to the embodiment of the present invention.
FIG. 3 is a perspective view illustrating a capsule mounting part according to the embodiment of the present invention.
FIG. 4 is an exploded perspective view illustrating a container according to the embodiment of the present invention.
FIG. 5 is a perspective view illustrating the accommodating apparatus according to the embodiment of the present invention.
FIG. 6 is a sectional view illustrating the accommodating apparatus and the container according to the embodiment of the present invention.
FIG. 7 is a view illustrating an aspect in which the accommodating apparatus is mounted in the container according to the embodiment of the present invention.
FIG. 8 is a view illustrating an aspect in which an injection tube provided in the accommodating apparatus is changed according to the embodiment of the present invention.
FIG. 9 is a plan view illustrating a bubble prevention part according to the embodiment of the present invention.
FIG. 10 is a sectional view illustrating the bubble prevention part according to the embodiment of the present invention.
FIG. 11 is a view illustrating an aspect in which the volume of a storage part is changed depending on contents according to the embodiment of the present invention.
FIG. 12 is a perspective view illustrating an external fixing strip for maintaining the shape of the storage part according to the embodiment of the present invention.
FIG. 13 is a schematic view illustrating the beer maker according to the embodiment of the present invention.
FIG. 14 is a flowchart illustrating a process of brewing beer in the beer maker according to the embodiment of the present invention.

### MODE FOR CARRYING OUT THE INVENTION

Hereinafter, exemplary embodiments of the present invention will be described in detail with reference to the accompanying drawings.

Only without special definition, terminology used in the specification of the present invention may be identical to general meaning of common terminology understood by people who are skilled in the art the present invention pertains to. If the meaning of the terminology used in the present specification collides with common meaning of terminology used in this art, the definition of the terminology used in the present specification is adapted.

Meanwhile, the configuration or control method of an apparatus to be described below are intended to explain the embodiments of the present invention and are not intended to limit the scope of the present invention. The same elements are designated by the same reference numerals throughout the specification.

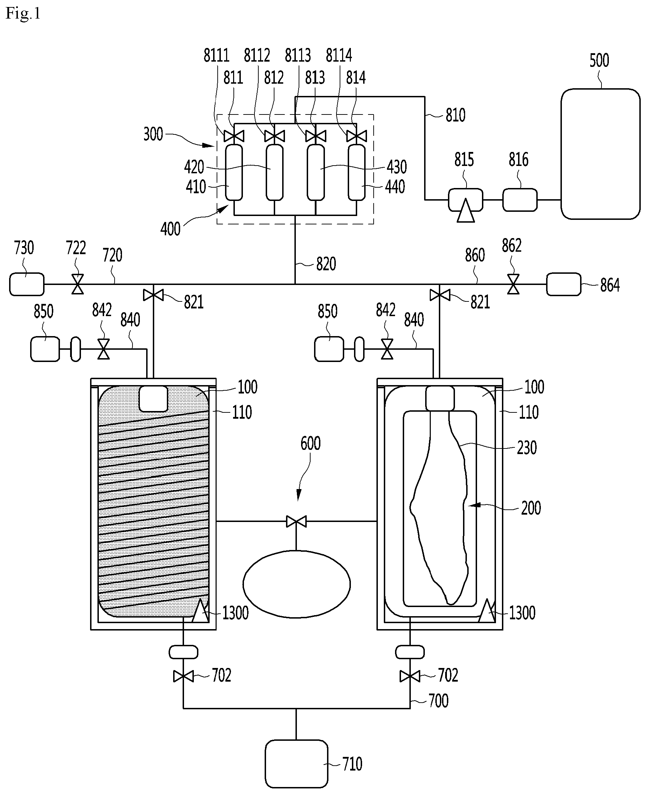

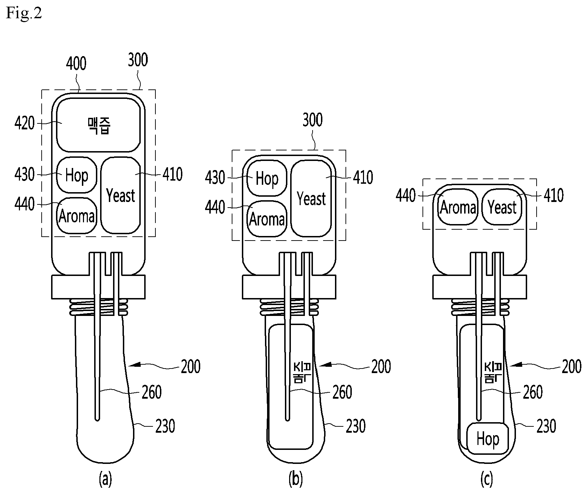

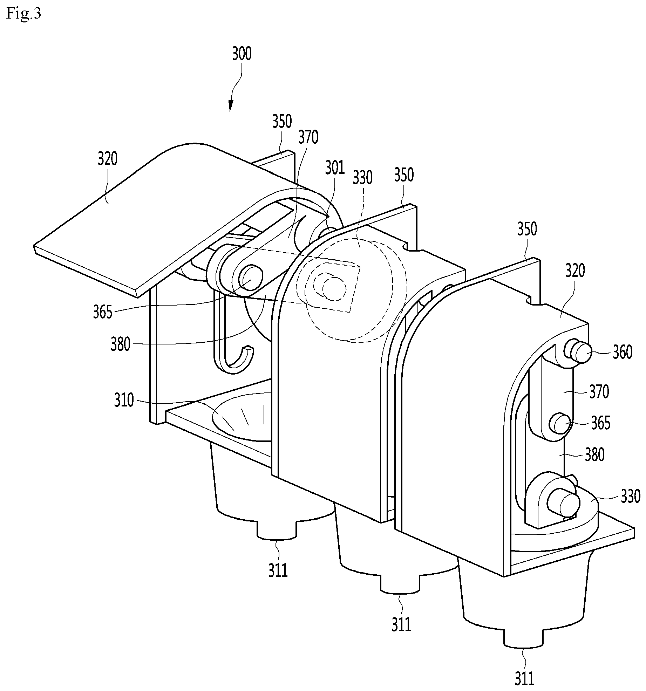

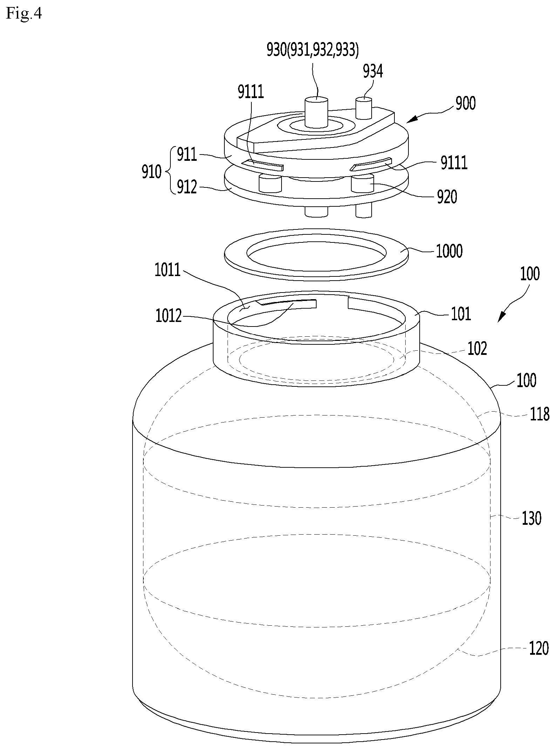

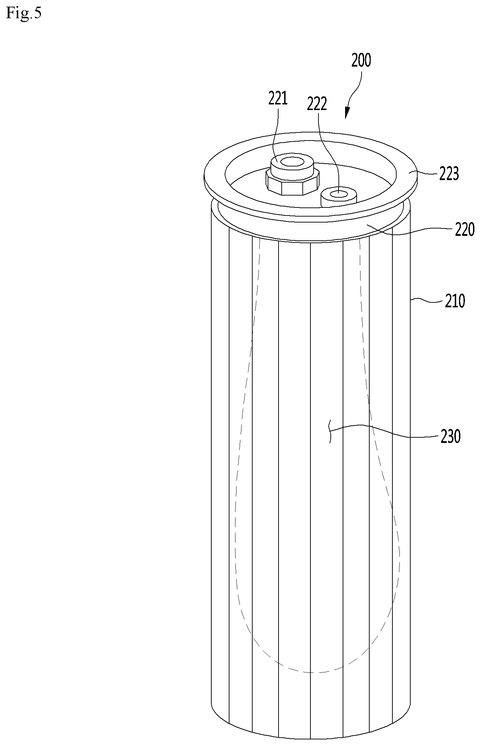

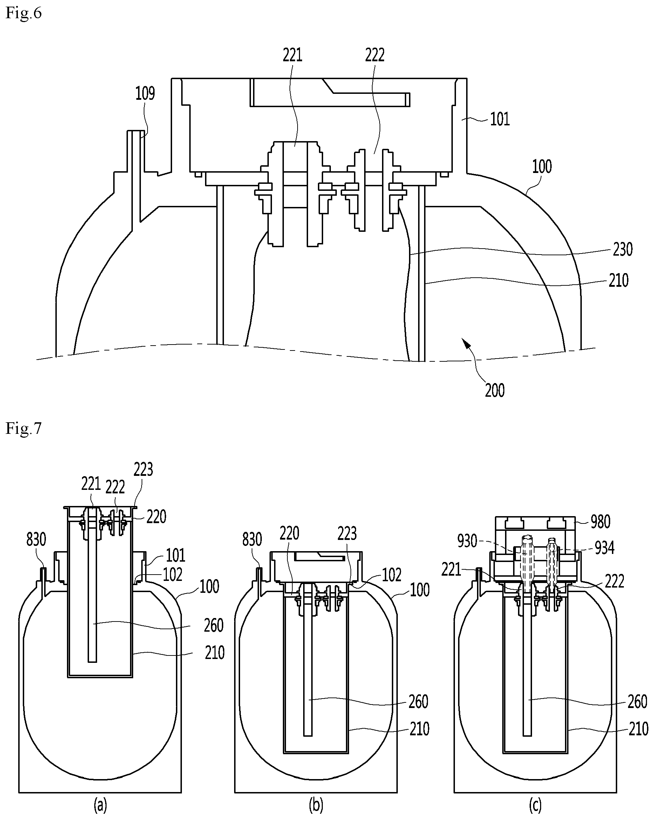

FIG. 1 is a configuration view illustrating a beer maker according to an embodiment of the present invention. FIG. 2 is a view illustrating that beer materials are accommodated in a capsule and an accommodating apparatus according to the embodiment of the present invention. FIG. 3 is a perspective view illustrating a capsule mounting part according to the embodiment of the present invention. FIG. 4 is an exploded perspective view illustrating a container according to the embodiment of the present invention. FIG. 5 is a perspective view illustrating the accommodating apparatus according to the embodiment of the present invention. FIG. 6 is a sectional view illustrating the accommodating apparatus and the container according to the embodiment of the present invention. FIG. 7 is a view illustrating an aspect in which the accommodating apparatus is mounted in the container according to the embodiment of the present invention.

The beer maker includes a container 100 including an opening 101, the container 100 providing a storage space; an accommodating apparatus 200 attachable/detachable to the storage space through the opening 101, the accommodating apparatus 200 providing a space in wort including malt and water is stored; a capsule mounting part 300 communicating with the accommodating apparatus 200; and at least one capsule 400 attachably/detachably provided in the capsule mounting part 300.

The container 100 may be a rigid body made of a thermal conductive material. The container 100 may be formed of stainless steel material.

Wort, yeast, hop, and aroma, which are required to brew beer, may all be accommodated in the accommodating apparatus 200 attachably/detachably accommodated in the container 100.

The beer maker may include a temperature controller that controls a temperature of the container 100. The temperature controller may control the temperature of the container 100 to maintain an appropriate temperature when the beer is brewed in the container 100. The temperature controller may be provided as any component as long as it can control the temperature of the container 100.

The container 100 may control temperatures of wort and water using heat or cool air supplied from a refrigeration cycle 600, and ferment beer materials including wort, water, hop, and aroma.

The container 100 may be cooled, heated, or maintained at a constant temperature through the refrigeration cycle 600. The refrigeration cycle 600 may control a temperature of the accommodating apparatus 200 accommodated in the container 100.

The temperature controller may include the refrigeration cycle 600, and the refrigeration cycle 600 may include a compressor, a first heat exchanger, an expansion device, and a second heat exchanger, through which a refrigerant is circulated. The refrigeration cycle 600 may be configured as a heat pump including a flow path switching valve such as a four-way valve that switches a flowing direction of the refrigerant. When the refrigeration cycle 600 is configured as the heat pump, the refrigerant may be circulated in an order of the compressor, the first heat exchanger, the expansion device, and the second heat exchanger, or be circulated in an order of the compressor, the second heat exchanger, the expansion device, and the first heat exchanger. That is, the refrigeration cycle 600 may increase or decrease the temperature of the container 100 according to the flowing direction of the refrigerant.

Any one of the first heat exchanger and the second heat exchanger may be disposed to be in contact with the container 100. Any one of the first heat exchanger and the second heat exchanger may be disposed to surround the outer circumference of the container 100. The other of the first heat exchanger and the second heat exchanger may be disposed not to be in contact with the container 100. The beer maker may include a refrigerant flow path through which the refrigerant is supplied to an outer circumferential surface of the container 100.

The beer maker may further include a fermenting container 110 formed of a heat insulating member, in which the container 100 is accommodated.

Any one of the first heat exchanger and the second heat exchanger may be provided in the fermenting container 110. Any one of the first heat exchanger and the second heat exchanger may be provided on an inner circumferential surface of the fermenting container 110, and the other of the first heat exchanger and the second heat exchanger may be provided at the outside of the fermenting container 110.

A temperature sensor 1300 that measures a temperature in the container 100 to provide appropriate temperatures in a primary fermenting step, a secondary fermenting step, and a ripening step may be provided in the fermenting container 110 or the container 100.

A controller (not shown) may control driving of a first air pump 710, a second air pump 730, the refrigeration cycle 600, and the like, based on information measured through the temperature sensor 1300.

The capsule 400 may include a yeast capsule 410 accommodating yeast therein to supply the yeast to the accommodating apparatus 200.

The capsule 400 may include a wort capsule 420 accommodating wort therein to supply the wort to the accommodating apparatus 200.

The capsule 400 may include a hop capsule 430 accommodating hop therein to supply the hop to the accommodating apparatus 200.

The capsule 400 may include an aroma capsule 440 accommodating aroma therein to supply the aroma to the accommodating apparatus 200. The aroma capsule 440 may include an aroma material capable of adding flavor to the wort, and the aroma material accommodated in the aroma capsule 440 may be supplied to the accommodating apparatus 200 to be mixed with the wort accommodated in the accommodating apparatus 200.

At least one capsule 400 may be mounted for each kind in the capsule mounting part 300. A material accommodated in the capsule 400 among the wort, the hop, the aroma, and the yeast may be supplied to the accommodating apparatus 200 accommodated in the container 100.

The beer maker may include a water supply source 500 that supplies water.

The water supply source 500 may be a container provided as a water tank to store water. The water supply source 500 may be a water supply tube connected to an external water supply source to be supplied with water from the external water supply source.

Water of the water supply source 500 is supplied to the capsule mounting part 300 through a water supply flow path 810. The water passes through the capsule 400 attachably/detachably mounted in the capsule mounting part 300.

The water passing through the capsule 400 flows together with contents accommodated in the capsule 400 in a supply flow path 820, and is supplied to the inside of the accommodating apparatus 200 in the container 100 through the supply flow path 820.

The accommodating apparatus 200 may ferment and ripen beer materials in a state in which the wort, the yeast, the hop, and the aroma are all accommodated therein, thereby brewing beer.

The beer maker includes the water supply flow path 810 that supplies water to the capsule mounting part 300, and the supply flow path 820 through which water introduced into the capsule 400 is supplied together with materials accommodated in the capsule 400 to the accommodating apparatus 200.

The beer maker includes a pressurization flow path 700 connected to the container 100; and the first air pump 710 that pressurizes the accommodating apparatus 200 by supplying air between the container 100 and the accommodating apparatus 200 through the pressurization flow path 700.

The pressurization flow path 700 is connected to the container 100 at the outside of the container 100.

The pressurization flow path 700 guides pressurized air generated from the first air pump 710 to the inside of the container 100 by connecting the first air pump 710 and the inside of the container 100. The air moved to the inside of the container 100 through the pressurization flow path 700 pressurizes the accommodating apparatus 200 between the container 100 and the accommodating apparatus 200.

A pressurizing valve 702 that controls the flow rate of air supplied to the container 100 may be provided in the pressurization flow path 700.

The beer maker may include an air injection flow path 720 connected to the accommodating apparatus 200 to inject air into the accommodating apparatus 200; and the second air pump 730 connected to the air injection flow path 720 to inject air into the accommodating apparatus 200.

The air injection flow path 720 may inject air generated from the second air pump 730 into the accommodating apparatus 200 by connecting the second air pump 730 and the accommodating apparatus 200. The air injection flow path 720 may be connected to the accommodating apparatus 200 through the opening 101. The air injection flow path 720 may be connected to the supply flow path 820 to inject air into the accommodating apparatus 200 through the supply flow path 820.

The air supplied to the inside of the accommodating apparatus 200 through the air injection flow path 720 may supply oxygen capable of fermenting the wort, the aroma, the hop, and the yeast, which are accommodated in the accommodating apparatus 200. That is, a dissolved oxygen amount of the materials accommodated in the accommodating apparatus 200 may be increased.

An air injection valve 722 that controls the flow rate of air supplied to the accommodating apparatus 200 may be provided in the air injection flow path 720.

The beer maker includes the water supply flow path 810 connected to the capsule mounting part 300 to supply water to the capsule mounting part 300; and the supply flow path 820 through which water introduced into the capsule 400 is supplied together with the materials accommodated in the capsule 400 to the accommodating apparatus 200.

The water supply flow path 810 is connected to the water supply source 500. The water supply flow path 810 guides water of the water supply source 500 to the capsule mounting part 300. A heater 815 that heats supplied water may be provided in the water supply flow path 810. A water supply valve 816 that controls the flow rate of water supplied from the water supply source 500 may be provided in the water supply flow path 810.

A supply valve 821 may be provided in the supply flow path 820. The supply valve 821 may open/close the supply flow path 820. The supply valve 821 may control the flow rate of water discharged to the accommodating apparatus 200.

In a process of fermenting beer in the accommodating apparatus 200, carbonic acid may be excessively collected in the accommodating apparatus 200, and the pressure in the accommodating apparatus 200 may be increased.

The beer maker includes a discharge flow path 840 through which gas in the accommodating apparatus 200 is discharged. The discharge flow path 840 discharges gas generated from the accommodating apparatus 200 in a beer brewing process.

A discharge valve 842 that controls the flow rate of gas discharged from the accommodating apparatus 200 may be provided in the discharge flow path 840. A pressure sensor 850 may be provided in the discharge flow path 840.

The beer maker includes a drinking flow path 860 provided to discharge beer of the accommodating apparatus 200 to the outside of the container 100.

If beer is completely brewed in the accommodating apparatus 200, the beer may be discharged to the outside of the container 100 through the drinking flow path 860 such that a user can drink the beer.

The drinking flow path 860 may be connected to the supply flow path 820.

A drinking valve 862 that controls the flow rate of beer discharged from the accommodating apparatus 200 may be provided in the drinking flow path 860.

The beer maker may further include a nozzle 864 connected to the drinking flow path 860. The nozzle 864 may be provided to the drinking valve 862.

In the beer maker of this embodiment, materials of beer may be provided to the capsule mounting part 300 and the accommodating apparatus 200.

In FIG. 2, it is illustrated that the capsule mounting part 300 is directly coupled to the accommodating apparatus 200. However, actually, the capsule mounting part 300, as shown in FIG. 1, may be connected to the accommodating apparatus 200 through the supply flow path 820.

Wort produced including malt and water, yeast that ferments the wort, and hop that enriches taste by adding bitter taste to the wort are essentially required to brew beer. In addition, aroma may be further included to add rich flavor and taste to the beer.

Referring to FIG. 2, beer materials for brewing beer may be accommodated in the capsule 400 accommodated in the capsule mounting part 300, and the accommodating apparatus 200.

Referring to FIG. 2(a), the yeast capsule 410 accommodating yeast therein, the wort capsule 420 accommodating wort therein, the hop capsule 430 accommodating hop therein, and the aroma capsule 440 accommodating aroma therein may be attachably/detachably accommodated in the capsule mounting part 300. In this case, any content may not be accommodated in the accommodating apparatus 200.

If water is supplied from the water supply flow path 810 to the capsule mounting part 300, the water may be supplied to the wort capsule 420, and a mixture of the wort and the water may be supplied to the accommodating apparatus 200 through the supply flow path 820. As shown in FIG. 2(b), the yeast, the hop, and the aroma may remain in the capsule mounting part 300.

After that, water may be supplied to the hop capsule 430 through the water supply flow path 810, and a mixture of the hop and the water may be supplied to the accommodating apparatus 200 through the supply flow path 820.

Since the accommodating apparatus 200 is provided in the container 100 of which temperature and pressure are controlled, the wort and the water may be processed as fermentable wort through a heating process.

In this embodiment, the heating process may be omitted in the accommodating apparatus 200 as fermentable wort is contained in the wort capsule 420 from the beginning.

In other words, water, malt, and hop may be contained in the wort capsule 420.

After that, water may be supplied to the aroma capsule 440 and the yeast capsule 410 through the water supply flow path 810 to supply the aroma and the yeast to the accommodating apparatus 200.

The water may be selectively supplied to the yeast capsule 410, the wort capsule 420, the hop capsule 430 and the aroma capsule 440 through the water supply flow path 810 to be supplied to the accommodating apparatus 200 through the supply flow path 820.

Beer materials of the capsule mounting part 300 may be moved simultaneously or with a time difference to the accommodating apparatus 200. The beer materials accommodated in the accommodating apparatus 200 may be fermented in the container 100.

The supply flow path 810 may include a first water supply tube 811 connected to the yeast capsule 410, a second water supply tube 812 connected to the wort capsule 420, a third water supply tube 813 connected to the hop capsule 430, and a fourth water supply tube 814 connected to the aroma capsule 440 such that water can be selectively supplied to the yeast, the wort, the hop, and the aroma.

First to fourth water supply valves 8111 to 8114 that control opening/closing of the first to fourth water supply tubes 811 and 814 may be provided in the first to fourth water supply tubes 811 and 814, respectively.

The container 100 may control the temperature and pressure of the accommodating apparatus 200 and allow the wort, the hop, and the yeast to be fermented in the accommodating apparatus 200, thereby brewing beer.

The wort includes water and malt, and may have a larger volume than the yeast, the hop, and the aroma.

As described above, when the wort is accommodated in the wort capsule 420 and the wort capsule 420 is mounted in the capsule mounting part 300, the size of the capsule mounting part 300 may be larger than necessary.

In this embodiment, the wort is accommodated in the accommodating apparatus 200 from the beginning so as to enable the capsule mounting part 300 to become compact. In this case, the yeast capsule 410 containing the yeast therein, the hop capsule 430 containing the hop therein, and the aroma capsule 440 containing the aroma therein may be attachably/detachably provided in the capsule mounting part 300.

Referring to FIG. 2(b), the wort may be contained in the accommodating apparatus 200 from before beer is brewed using the beer maker. The accommodating apparatus 200 may be sold and carried in the state in which the wort is contained therein. The accommodating apparatus 200 may be inserted and mounted in the container 100 in the state in which the wort is contained therein.

The accommodating apparatus 200 accommodating the wort therein may be mounted in the container 100, and the yeast capsule 410 accommodating the yeast therein, the hop capsule 430 accommodating the hop therein, and the aroma capsule 440 accommodating the aroma therein may be mounted in the capsule mounting part 300.

In FIG. 2(b), it can be seen that the capsule 400 and the accommodating apparatus 200 are attachably/detachably provided in the beer maker.

The yeast accommodated in the yeast capsule may be provided as any one of yeasts produced by yeast specialty producers or self-developed by Brewery, such as S-04, US-05, US-06, WLP1, WLP2, WLP3, German ale, American wheat, London ale, Nottingham Ale Yeast, and Windsor Ale Yeast, which ferment wort.

A kind of hop essential oil or extract, such as Calypso Hop Oil, Columbus Hop Oil, Cascade Hop Oil, Iso Alpha Extract, Cascade Hop Extract, Chinook Hop Extract, or Summit Hop Extract, may be mainly applied to the hop accommodated in the hop capsule 430. Additionally, the hop accommodated in the hop capsule 430 may be provided as any one of other types of hops, such as pellet or powder.

Fruit- or vegetable-oriented or processed syrup, such as Apricot Puree, Blackberry Puree Fruit Flavor, or Apricot Flavor, may be mainly applied to the aroma accommodated in the aroma capsule 440. The aroma accommodated in the aroma capsule 440 may be made of a material processed using, as a base material, a material available as a beer additive such as Vanilla Beans, Bitter Orange Peel, Cinnamon Sticks, Coriander Seed, or Dried Elderberries.

That is, any materials with which beer is brewable may be provided as the above-described beer materials.

The capsule 400 may be provided as a plastic injection mold, and holes may be made in the capsule 400 in both directions of the capsule 400 in the capsule mounting part 300, so that the hop, the yeast, and the aroma can be extracted through the water supply flow path 810 and the supply flow path 820.

Referring to FIG. 3, the capsule mounting part 300 may include a capsule mounting groove 310 in which the capsule 400 can be accommodated, a supply tube 311 provided at a lower portion of the capsule mounting groove 310 to extract contents of the capsule 400 therethrough, the supply tube 311 being connected to the supply flow path 820, a capsule cover 320 opening/closing the capsule mounting groove 310 when the capsule 400 is mounted in the capsule mounting groove 310, and a pressurizing part 330 provided at the capsule cover 320, the pressurizing part 330 pressurizing the capsule 400 accommodated in the capsule mounting groove 310 to extract the contents of the capsule 400 when the capsule cover 320 covers the capsule mounting groove 310.

The capsule cover 320 may communicate with the water supply tubes 811 to 814.

The capsule cover 320 may be rotatably connected a capsule mounting body 350 extending from the capsule mounting groove 310 by a first rotating shaft 360, and at least one first supporting body 370 provided to protrude in the vertical direction from the first rotating shaft 360 may be provided at the first rotating shaft 360.

A second rotating shaft 365 parallel to the first rotating shaft 360 may be provided at one end of the first supporting body 370. At least one second supporting body 380 provided in the vertical direction from the second rotating shaft 365.

The pressurizing part 330 may be connected to the other end of the second supporting body 380.

The first rotating shaft 360 is connected to the capsule mounting body 350. However, the first rotating shaft 360 merely connects the other end of the first supporting body 370 and one end of the second supporting body 380 and may not be fixed to the capsule mounting body 350.

The rotational direction of the capsule cover 320 and the rotational direction of the pressurizing part 330 may be different from each other. When the capsule cover 320 covers the capsule mounting groove 310, the pressurizing part 330 may pressurize an upper portion of the capsule 400 accommodated in the capsule mounting groove 310.

The capsule mounting groove 310 may be provided in plurality, and the yeast capsule 410, the hop capsule 430, and the aroma capsule 440 may be attachably/detachably provided in the respective capsule mounting grooves 310.

The yeast capsule 410, the hop capsule 430, and the aroma capsule 440 may correspond to the shape of the capsule mounting groove 310, and the capsule mounting groove 310 may have a cylindrical shape.

Meanwhile, one capsule mounting groove 310 may be formed in the capsule mounting part 300, and the yeast capsule 410, the hop capsule 430, and the aroma capsule 440 may be provided in spaces obtained by partitioning the capsule mounting groove 310.

When the yeast capsule 410, the hop capsule 430, and the aroma capsule 440 are all included, the shape of the capsule mounting groove 310 is not limited to a specific shape as long as it can accommodate them therein.

Referring to FIG. 4, the beer maker includes a sealing part 900 attachably/detachably provided in the opening 101 to seal the opening 101.

The sealing part 900 may include a sealing body 910 sealing the opening 101; and an air injection hole 931, a supply hole 932, an outlet hole 933, and a discharge hole 934, which are provided to pass through the sealing body 910.

The sealing body 910 may be attachably/detachably provided in the opening 101 and seal the opening 101.

The air injection hole 931 may be connected to the air injection flow path 720 to supply air to the accommodating apparatus 200, thereby increasing a dissolved oxygen amount. The air injection hole 931 enables the yeast in the accommodating apparatus 200 to continuously survive, thereby fermenting beer.

The supply hole 932 may be connected to the supply flow path 820 to deliver the water supplied from the capsule mounting part 300 and the beer materials accommodated in the capsule 400 to the inside of the accommodating apparatus 200.

The outlet hole 933 may be connected to the drinking flow path 860 to allow beer brewed in the accommodating apparatus 200 to be discharged therethrough, so that the user can drink the beer.

The discharge hole 934 may be connected to the discharge flow path 840 to allow gas generated from the accommodating apparatus 200 to be discharged to the outside of the container 100, so that the pressure in the accommodating apparatus 200 can be controlled.

The air injection hole 931, the supply hole 932, and the outlet hole 933 may be provided as a plurality of through-holes each provided to pass through the sealing body 910.

The air injection hole 931, the supply hole 932, and the outlet hole 933 are in common in that fluids flow therethrough. The air injection hole 931, the supply hole 932, and the outlet hole 933 may commonly use one through-hole 930. In this case, the through-hole 930 may be connected to the supply flow path 820, and the drinking flow path 860 and the air injection flow path 720 may be connected to the supply flow path 820.

The sealing body 910 may include the through-hole 930 passing through the sealing body 910, and the discharge hole 934 spaced apart from the through-hole 930 to pass through the sealing body 910.

The discharge hole 934 may be connected to the discharge flow path 840.

The sealing body 910 may include an upper body 911 opening/closing the opening 101, a lower body 912 spaced apart from the upper body 911 to be in contact with a stopper part 220, and at least one elastic part 920 capable of controlling a spacing distance between the upper body 911 and the lower body 912. The lower body 912 may be in contact with the stopper part 220 by being adhered closely to the stopper part 220.

The upper body 911 may be inserted into the inner circumferential surface of the opening 101 to seal an upper portion of the opening 101.

A fastening member 9111 may protrude from the outer circumferential surface of the upper body 911.

The opening 101 of the container 100 may include a first groove 1011 guiding the fastening member 9111 to move in the top-bottom direction in the inner circumferential surface thereof, and a second groove 1012 guiding the fastening member 9111 to move in any one of a clockwise direction and a counterclockwise direction in a state in which the fastening member 9111 is inserted into the first groove 1011.

If the fastening member 9111 is fixed by passing through the first groove 1011 and then rotating along the second groove 1012, the sealing part 900 can stably seal the opening 101 even when the pressure in the container 100 is increased.

The lower body 912 may be adhered closely to an upper surface of the accommodating apparatus 200 by the elastic part 920. The lower body 912 may be moved in the opposite direction of the upper body 911 by the elastic part 920. The lower body 912 may be adhered closely to the upper surface of the accommodating apparatus 200. The lower body 912 can be stably adhered closely to the accommodating apparatus 200 even when the accommodating apparatus 200 is moved back to the opening 101 as the pressure in the container 100 is increased.

The lower body 912 enables the accommodating apparatus 200 to be stably adhered closely to the container 100 even when a tolerance exists between the accommodating apparatus 200 and the container 100.

The elastic part 920 connects the upper body 911 and the lower body 912, and may pressurize the lower body 912 in the direction of the stopper part 220. The elastic part 920 may be provided as a spring.

The beer maker may further include a sealing member 1000 sealing between the lower body 912 and the opening 101.

Accordingly, the sealing member 1000 perfectly seals the container, to maintain the pressure in the container 100 even when a difference in pressure between the container 100 and the outside occurs. Further, the sealing member 1000 enables contents of the accommodating apparatus 200 not to be extracted to the outside.

The container 100 may include a first curved surface part 118 extending curved from the opening 101, an inner side part 130 extending from the first curved surface part 118, and a second curved surface part 120 extending curved in the opposite direction of the first curved surface part 118 from the inner side part 130. A storage space may be formed inside the container 100.

The first curved surface part 118 and the second curved surface part 120 may be provided in a hemispherical shape, and the inner side part 130 may be provided in a cylindrical shape.

Accordingly, beer can be stably accommodated in the container 100 even when a high pressure is formed as the amount of carbonic acid gas is increased in a process in which the beer is fermented in the container 100.

The opening 101 may include a supporting pat 102 protruding from the inner circumferential surface of the opening 101 such that the sealing part 900 is not inserted into the container 100.

When the accommodating apparatus 200 is inserted into the opening 101, an upper end of the accommodating apparatus 200 may be mounted and held to the supporting part 102. The supporting part 102 may determine an insertion depth of the accommodating apparatus 200.

Referring to FIGS. 5 and 6, the accommodating apparatus 200 may include an accommodating body part 210 provided in a cylindrical shape. The accommodating apparatus 200 may include the stopper part including a flow hole 221 communicating with the through-hole 930 and an exhaust hole 222 communicating with the discharge hole 934, and a storage part 230 connected to the stopper part 230, the storage part 230 in which a space accommodating wort therein is formed, the storage part 230 having a changeable volume.

The accommodating body part 210 may be coupled to the stopper part 220, and have a space in which the storage part 230 is accommodated.

The stopper part 220 may be coupled to an upper portion of the accommodating body part 210.

The volume of the storage part 230 may be changed when contents in the storage part 230 accommodated in the accommodating body part 210 are introduced or discharged.

If beer is completely brewed as the beer is fermented in the storage part 230, the first air pump 710 shown in FIG. 1 may compress the storage part 230 by pressurizing air to allow the beer brewed in the storage part 230 to be discharged to the drinking flow path 860.

A pressurization flow path connecting part 109 connected to the pressurization flow path 700 shown in FIG. 1 may be formed in the container 100.

The storage part 230 may be configured as a flexible bag that is expandable and compressible. The storage part 230 may be configured as a plastic or vinyl bag. The storage part 230 may swell as carbonic acid gas, etc. is generated when beer is fermented and ripened in the storage part 230. The storage part 230 may be compressed by a pressure between the storage part 230 and the container 100.

An upper portion of the storage part 230 may be connected to the stopper part 220.

The accommodating body part 210 may be a rigid body to protect the storage part 230.

This is because, when the storage part 230 is independently provided as a vinyl or plastic bag, it is highly likely that the storage part 230 will be damaged.

The accommodating apparatus 200 may be sold in a state in which the storage part 230 is accommodated in the accommodating body part 210.

In order to brew beer, the user may purchase the beer maker, the accommodating apparatus 200, and the capsule 400.

The accommodating apparatus 200 and the capsule 400 may be provided as consumables and replaceable products.

The stopper part 220 may include a mounting part 223 mounted on the supporting part 102 shown in FIG. 4. The mounting part 223 may protrude from an upper outer circumferential surface of the stopper part 220. The mounting part 223 may be a rib protruding along the upper outer circumferential surface of the stopper part 220.

The stopper part 220 may further include the exhaust hole 222 provided to pass through the stopper part 220. The exhaust hole 222 may be provided to be spaced apart from the flow hole 221.

The flow hole 221 and the exhaust hole 222 may be provided to communicate with the inside of the storage part 230.

A process in which the accommodating apparatus 200 is attachably/detachably provided in the container 100 will be described as follows with reference to FIG. 7.

The accommodating apparatus 200, as shown in FIG. 7(a), is inserted into the container 100 through the opening 101 of the container 100.

The stopper part 220 of the accommodating apparatus 200, as shown in FIG. 7(b), may be mounted on the supporting part 102. The mounting part 223 of the stopper part 220 may be mounted on the supporting part 102, and the accommodating apparatus 200 may be completely inserted into the container 100. When the mounting part 223 of the stopper part 220 is mounted on the supporting part 102, the accommodating apparatus 200 may be prevented from being excessively inserted into the container 100.

As described above, after the accommodating apparatus 200 is completely inserted into the container 100, the opening 101, as shown in FIG. 7(c), may be sealed by the sealing part 900.

When the sealing part 900 seals the opening 101 after the accommodating apparatus 200 is inserted into the container 100, the through-hole 930 of the sealing part 900 and the flow hole 221 of the accommodating apparatus 200 may be adhered closely to communicated with each other, and the discharge hole 934 of the sealing part 900 and the exhaust hole 222 of the accommodating apparatus 200 may be adhered closely to communicate with each other.

The accommodating apparatus 200 may be supplied with water, hop, yeast, aroma, wort, and the like from the supply flow path 820 through the through-hole 930 and the flow hole 221, and discharge carbonic acid gas to the discharge flow path 840 through the exhaust hole 222 and the discharge hole 934.

Referring to FIG. 7, the accommodating apparatus 200 may include an injection tube 260 communicating with the flow hole 221, the injection tube 260 extending to the inside of the storage part 230.

The accommodating apparatus 200 can be stably supplied with materials of beer through the injection tube 260.

The injection tube 260 may be formed of a soft material to be bendable or foldable. Wort may be included in the storage part 230 from the beginning. Although the volume of the storage part 230 is changed, the bottom end of the injection tube 260 may be disposed at a lower portion of the storage part 230.

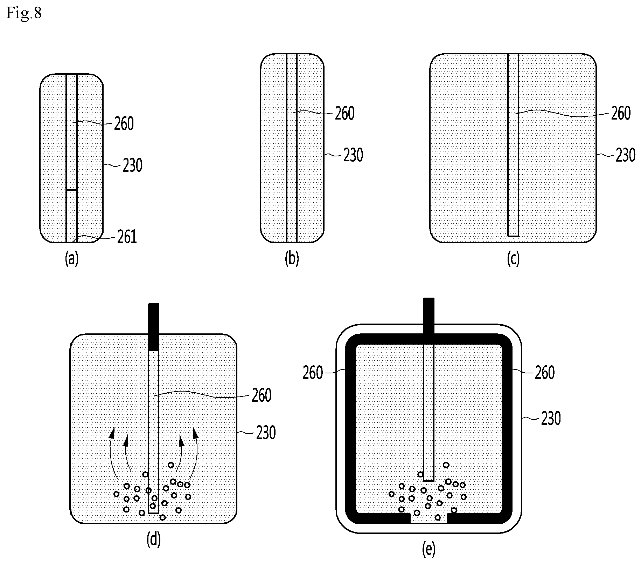

FIG. 8 is a view illustrating an aspect in which the injection tube provided in the accommodating apparatus is changed according to the embodiment of the present invention.

A portion of the injection tube 260, as shown in FIG. 8(a), may be folded as a folding part 261 is folded.

If water is supplied through the injection tube 260, the storage part 230 may downwardly expand, and the folding part 261 may be unfolded. As the folding part 261 is unfolded, the length of the injection tube 260, as shown in FIG. 8(b), may extend in the lower direction.

The water may be continuously supplied through the injection tube 260, and yeast, hop, and aroma may also be supplied.

If carbonic acid gas is generated as wort is fermented, the volume of the storage part 230 may further expand.

Even in this case, the injection tube 260 may extend down to the lower portion of the storage part 230. The bottom end of the injection tube 260 may extend down to the lower portion of the storage part 230.

Air introduced from the air injection flow path 720 through the through-hole 930 may stir the wort in the storage part 230. Also, the air may increase the entire dissolved oxygen amount of the wort.

The injection tube 260 may considerably contribute to successful fermentation and ripening of beer.

Since the bottom end of the injection tube 260 is located at the lower portion of the storage part 230, the entire beer can be discharged to the drinking flow path 860 through the injection tube 260 when the beer is completely brewed.

Since the injection tube 260 is formed of a soft material, the shape of the injection tube 260 can be changed to be suitable for a change in volume of the storage part 230.

As another example of the injection tube 260, referring to FIG. 8(e), the injection tube 260 may be provided to extend from the upper portion to the lower portion of the storage part 230 in a state in which the injection tube 260 is attached to an inner wall of the storage part 230.

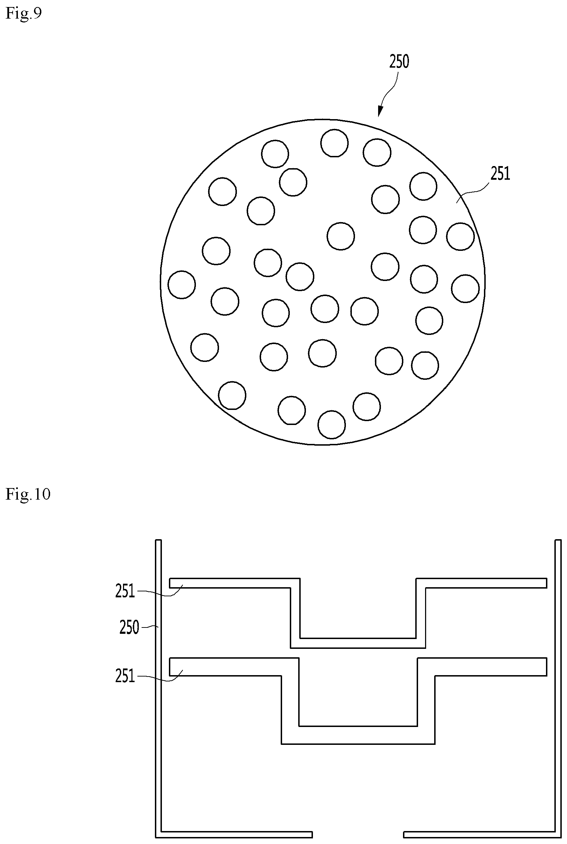

FIG. 9 is a plan view illustrating a bubble prevention part according to the embodiment of the present invention. FIG. 10 is a sectional view illustrating the bubble prevention part according to the embodiment of the present invention.

A structure in which bubbles do not flow backward in the storage part will be described as follows with reference to FIGS. 9 and 10.

If beer is fermented and ripened in the storage part 230 accommodating water, wort, aroma, and hop therein, a considerable amount of bubbles may be generated as carbonic acid gas is generated.

In this case, when the pressure in the storage part 230 is excessively increased as a large amount of carbonic acid gas is discharged, the exhaust hole 221 of the accommodating body part 210 may discharge the carbonic acid gas through the discharge flow path 840.

The beer maker may include a bubble prevention part 250 that allows bubbles of the beer not to flow backward through the exhaust hole 221.

The bubble prevention part 250 may include a baffle 251 having a plurality pores. Accordingly, when bubbles are discharged together with the carbonic acid gas through the exhaust hole 221, the bubbles can be in contact with the baffle 251 to be extinguished while passing through the bubble prevention part 250.

The baffle 251 of the bubble prevention part 250 may be provided in a double layer in the path direction of the exhaust hole 221.

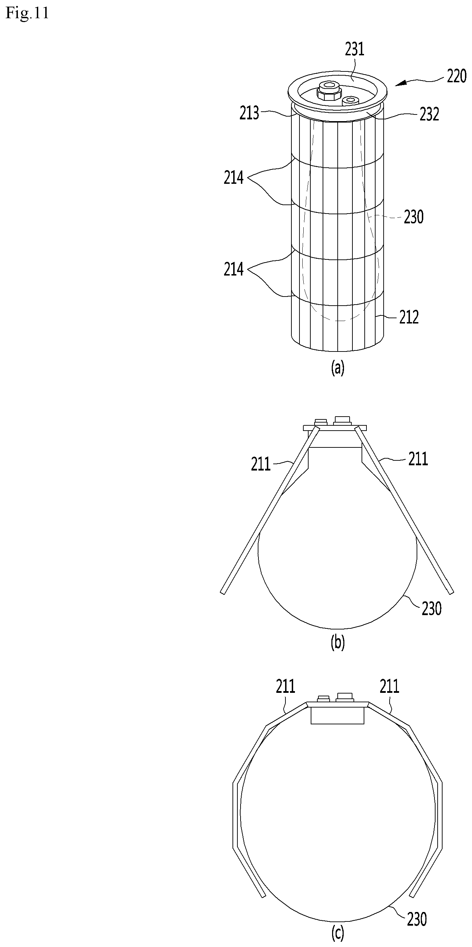

FIG. 11 is a view illustrating an aspect in which the volume of the storage part is changed depending on contents according to the embodiment of the present invention.

A structure in which the shape of the accommodating body part 210 is changed will be described with reference to FIG. 11.

FIG. 11(a) is a perspective view before the shape of the accommodating body part 210 is changed by the storage part 230. FIG. 11(b) is a sectional view illustrating an example in which the shape of the accommodating body part 210 is changed by the storage part 230. FIG. 11(c) is a sectional view illustrating another example in which the shape of the accommodating body part 210 is changed by the storage part 230.

The volume of the storage part 230 may be changed as beer is brewed, and it is necessary that the shape of the accommodating body part 210 should also be changed.

To this end, the accommodating body part 210 may be provided such that a plurality of plate members 211 provided in a polygonal shape at the outer circumferential surface of the stopper part 220 are coupled to one another.

Referring to FIGS. 11(b) and 11(c), the plate members 211 may be separated from one another to be spread from one another when the volume of the storage part 230 is increased.

The plate members 211 may be completely separated from one another to be provided at the outer circumferential surface of the stopper part 220. However, the plate members 211 are connected to one another at the beginning, and may be separated from one another to be spread from one another by a force generated when the storage part 230 expands.

That is, as shown in FIG. 11(a), cut-out lines 212 having a thinner thickness than the plate members 211 may be provided between the plate members 211.

Accordingly, the plate members 211 are connected to one another at the beginning, and the cut-out lines can be separated from one another as the storage part 230 pushes the plate members 211 when the storage part 230 expands. The plate members 211 can be separated from one another to be spread from one another.

The stopper part 220 may include a stopper body 231 having a cylindrical shape, and a coupling body 232 extending at a lower portion of the stopper body 231 to have a smaller radius than the stopper body 231. The plate members 211 may be provided to extend from the coupling body 232.

One ends of the plate members 211 may be coupled to the coupling body 232. A first bending line 213 having a thinner thickness than the coupling body 232 and the plate members 211 may be provided between the coupling body 232 and the one ends of the plate members 211.

Accordingly, the plate members 211, as shown in FIG. 11(b), can be lifted upward by rotating about the first bending line 213 at the coupling body 232.

The plate members 211 are preferably provided in a rectangular bar shape.

The plate members 211, as shown in FIG. 11(a), may be provided with at least one second bending line 214 having a thinner thickness than the plate members 211 at a certain distance from one end to the other end extending from the coupling body 232.

Therefore, the plate members 211 are not indefinitely spread from one another, but may be bendably spread from one another as the second bending line is bent due to influence of gravity.

That is, if the storage part 230 expands, the plate members 211 may be lifted in the upper direction to surround the surface of the storage part 230 as the second bending line 214 is bent.

Accordingly, although the plate members 211 rotate in the upper direction, the plate members 211 can be accommodated in the storage space of the container 100.

The accommodating body part 210 having the plate members 211 coupled to one another may guide the storage part 230 to be inserted into or extracted from the container 100, and guide the shape in which the storage part 230 expands.

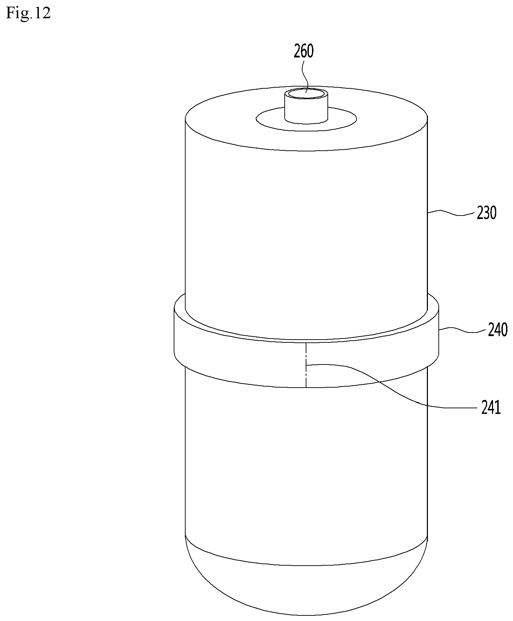

FIG. 12 is a perspective view illustrating an external fixing strip for maintaining the shape of the storage part according to the embodiment of the present invention.

Referring to FIG. 12, the storage part 230 may further include an external fixing strip 240 surrounding the outer circumferential surface of the storage part 230 to maintain the shape of the storage part 230 in the accommodating body part 210 before the volume of the storage part 230 expands.

The external fixing strip 240 may maintain the shape of the storage part 230 such that wort, hop, aroma, yeast, water, and the like can be easily filled in the storage part 230. The external fixing strip 240 may function to allow the injection tube 260 to be provided at a normal position.

The external fixing strip 240 may be formed of a material such as paper, vinyl, or plastic. The external fixing strip 240 may be provided with a perforated line 241.

The perforated line 241 may be provided to be cut when the volume of the storage part 230.

The external fixing strip 240 may be formed of an elastic material without the perforated line 241.

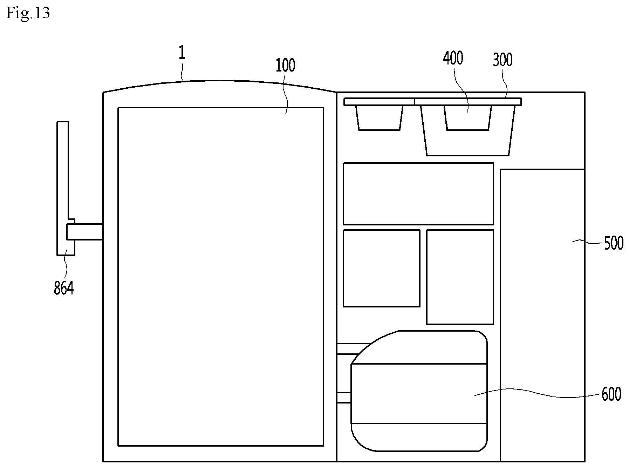

FIG. 13 is a schematic view illustrating the beer maker according to the embodiment of the present invention.

The beer maker may include a cabinet 1, a water tank accommodated in the cabinet 1 to serve as the water supply source 500, the capsule mounting part 300 communicating with the water tank to be supplied with water, the capsule mounting part 300 enabling the capsule 400 to be mounted therein, the container 100 supplied with materials of beer and water from the capsule mounting part 300, the refrigeration cycle 600 heating or cooling the container 100, and the nozzle 864 discharging the beer from the container 100, the nozzle 864 being connected to the drinking flow path 860.

The cabinet 1 may include an opening part (not shown) through which upper surfaces of the container 100 and the capsule mounting part 300 are opened. The user may open the opening part to attachably/detachably mount the accommodating apparatus 200 in the container and to attachably/detachably mount the capsule 400 in the capsule mounting part 300.

The capsule 400 and the accommodating apparatus 200 may be inserted into the cabinet 1 to brew the beer. If the beer is completely brewed, beer may be again brewed by replacing the capsule 400 and the accommodating apparatus 200.

Hereinafter, a process of brewing beer in the beer maker will be described.

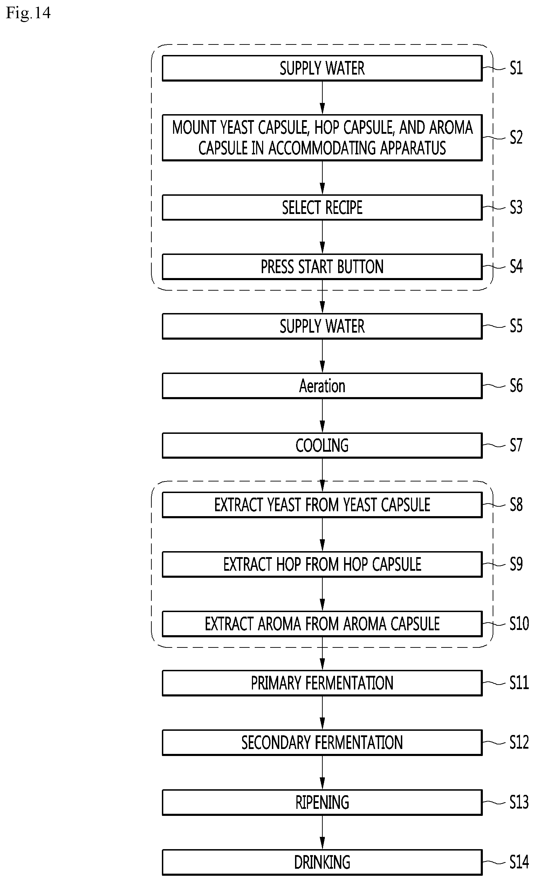

FIG. 14 is a flowchart illustrating a process of brewing beer in the beer maker according to the embodiment of the present invention.

The beer maker may include a controller (not shown) that controls the water supply valve 816, the supply valve 821, the drinking valve 862, the pressurizing valve 702, and the air injection valve 722, and operates the refrigeration cycle 600, the first air pump 710, and the second air pump 730.

The controller may be provided as a microcomputer, and any component may be provided as the controller as long as it performs an algorithm capable of driving the beer maker. Various recipes for brewing beer may be previously stored in the controller.

The beer maker may be provided with a brewing start button and a display to transmit a command of a user to the controller or display contents of the controller to the user.

Referring to FIG. 14, in order to brew beer, the user may allow water to be supplied to the water supply source 500 (S1). That is, when the water supply source 500 is provided as a water tank, water may be supplied to the water tank. When the water is supplied to the water supply tube, the water supply valve may be opened.

After that, the user may mount, in the capsule mounting part 300, the yeast capsule 410 containing yeast therein, the hop capsule 430 containing hop therein, and the aroma capsule 440 containing aroma therein. In an embodiment in which wort is contained in the wort capsule 420, the user may also mount the wort capsule 420 in the capsule mounting part 300. The user may mount the accommodating apparatus 200 in the container 100.

However, when the wort is contained in the storage part 230 of the accommodating apparatus 200 at the beginning, the accommodating 200 having the storage part 230 accommodating the wort therein may be mounted in the container 100 (S2).

After that, the user may select a brewing recipe of a desired kind of beer through a manipulating part (not shown) (S3), and press a start button (not shown) (S4).

If the process is performed up to the above-described steps, the controller (not shown) supplies water to the storage part 230 provided in the accommodating apparatus 200 through the supply flow path 820 by opening the water supply valve 816 of the water supply flow path 810 (S5). In this case, the water supply flow path 810 and the supply flow path 820 may communicated with each other. When the water passes through the capsule mounting part 300, contents of the capsule 400 are not extracted, but only the water may pass through the capsule mounting part 300.

After that, a steeping process or aeration is performed by allowing the wart containing malt therein to be in contact with the supplied water in the storage part 230 (S6).

As the container 100 is cooled by performing the aeration and then driving the refrigeration cycle 600, the storage part 230 is cooled to prepare fermentation of the wort (S7)

After that, the capsule mounting part 300 extracts contents by pressurizing the capsule 400 (S8, S9, and S10).

That is, the contents of the capsule 400 are extracted by supplying water to the capsule mounting part 300 from the water supply source 500 and selectively opening the first to fourth water supply valves 8111 to 8114.

In the capsule 400, an order in which the yeast capsule 410, the wort capsule 420, the hop capsule 430, and the aroma capsule 440 are opened may be changed depending on recipes or conditions.

For example, when the wort capsule 420 is omitted as the wort is accommodated in the storage part 230, the hop accommodated in the hop capsule 430 may be first extracted to be supplied to the storage part 230 by opening the third water supply valve 8113. Accordingly, the wort in the storage part 230 can be processed to retain bitter taste of beer.

Next, the yeast accommodated in the yeast capsule 410 may be supplied to the storage part 230 by opening the first water supply valve 8111 such that the wort is fermented.

Finally, the aroma accommodated in the aroma capsule 440 may be supplied to the storage part 230 by opening the fourth water supply valve 8114 such that the wort is fermented.

After steps S8 to S10 or simultaneously, the beer maker may perform primary fermentation on the beer accommodated in the storage part 230 (S11), and perform secondary fermentation after the primary fermentation is performed (S12).

The temperature, pressure, and term of the primary fermentation may be determined according to a beer recipe selected by the user.

Like the primary fermentation, the temperature, pressure, and term of the secondary fermentation may be determined according to a beer recipe selected by the user.

The primary fermentation and the secondary fermentation may be automatically performed by the controller.

In the primary fermentation and the secondary fermentation, the controller may supply air to the storage part 230 by driving the second air pump 730. The air supplied to the storage part 230 is supplied through the injection tube 260 to stir the wort, so that the fermentation can be better performed.

In the primary fermentation and the secondary fermentation, when carbonic acid gas is excessively collected in the process of fermenting the wort in the storage part 230, the controller may control the pressure in the storage part 230 by opening the discharge valve 842 to discharge the carbonic acid gas.

If the primary fermentation and the secondary fermentation are completed, the beer maker may ripen the beer in the storage part 230 according to a predetermined term, a predetermined temperature, and a predetermined pressure (S13).

If the ripening is completed, the user can drink the beer brewed in the storage part 230 (S14).

When the user drinks the beer, the controller may pressurize the storage part 230 by driving the first air pump 710 such that the beer is discharged to the outside of the beer maker through the drinking flow path 860 along the injection tube 260.

Accordingly, although a small amount of the brewed beer remains in the storage part 230, the user can drink the entire beer.

If the brewed beer is exhausted in the storage part 230 as the drinking is completed, the user may open the sealing part 900 of the container 100 and then extract the accommodating apparatus 200. Also, the user may extract the capsule 400 mounted in the capsule mounting part 300.

Accordingly, the user can simply again perform beer brewing without sterilizing and cleansing the beer maker.

The user may again start beer brewing by again mounting, in the beer maker, the capsule 400 containing beer materials therein and the accommodating apparatus 200 in which wort may be contained.

The process has been described based on a case where the wort is accommodated in the accommodating apparatus 200 at the early period, and the yeast capsule 410 containing the yeast therein is mounted in the capsule mounting part 300. However, a case where the accommodating apparatus 200 is empty at the early period, and the wort is provided in the wort capsule 420 may be identically applied to the process.

In this case, a process of mounting the wort capsule may be further include in step S2, and a process of extracting the wort capsule may be further included in steps S8, S9, and S10.

Accordingly, in the beer maker of the present invention, if only water and a capsule are injected, the preparation of beer materials is completed, thereby maximizing user's convenience.

Further, in the beer maker of the present invention, a complicated beer brewing process is automated, so that beer brewing can be completed without user's artificial intervention.

Further, in the beer maker of the present invention, the user can brew unique beer by selecting a capsule accommodating various materials therein in the beer brewing process, so that the user can have large variety of choice.

Further, in the beer maker of the present invention, after the beer brewing is completed, the accommodating apparatus can be replaced to be immediately reused, thereby minimizing an additional cleansing or sterilizing process.

Further, in the beer maker of the present invention, although the user does not understand or acquaint the beer brewing process, the user can perform the entire process of beer brewing, thereby drinking beer.

Although the exemplary embodiments have been illustrated and described as above, of course, it will be apparent to those skilled in the art that the embodiments are provided to assist understanding of the present invention and the present invention is not limited to the above described particular embodiments. The scope of the present invention is set forth in the appended claims.

## Claims

1. A beer maker comprising:
a container (100) including an opening (101), the container (100) providing a storage space;
an accommodating apparatus (200) attachably/detachably provided in the storage space through the opening (101), the accommodating apparatus (200) providing a space in which wort is stored;
a capsule mounting part (300) communicating with the accommodating apparatus (200);
a water supply flow path (810) through which water is supplied to the capsule mounting part (300);
a supply flow path (820) through which water introduced into a capsule (400) attachably/detachably provided in the capsule mounting part (300) is supplied together with the materials accommodated in the capsule (400) to the accommodating apparatus (200);
a drinking flow path (860) provided to discharge beer of the accommodating apparatus (200) to the outside of the container (100);
a discharge flow path (840) through which gas generated from the accommodating apparatus (200) in a beer brewing process is discharged; a pressurization flow path (700) connected to the container (100); and
a first air pump (710) configured to pressurize the accommodating apparatus (200) by supplying air between the container (100) and the accommodating apparatus (200) through the pressurization flow path (700).

2. The beer maker according to claim 1, wherein a discharge valve (842) controlling a flow rate of the gas discharged from the accommodating apparatus (200) is provided in the discharge flow path (840).

3. The beer maker according to claim 1 or 2, further comprising a sealing body (910) attachably/detachably provided in the opening (101) to seal the opening (101),
wherein a through-hole (930) connected to the supply flow path (820) and a discharge hole (934) connected to the discharge flow path (840) are formed in the sealing body (910).

4. The beer maker according to any one of the preceding claims, wherein a supply valve (821) opening/closing the supply flow path (820) is provided in the supply flow path (820), and/or
wherein a drinking valve (862) controlling a flow rate of the beer discharged from the accommodating apparatus (200) is provided in the drinking flow path (860).

5. The beer maker according to any one of the preceding claims, wherein a pressurizing valve (702) controlling a flow rate of the air supplied to the container (100) is provided in the pressurization flow path (700).

6. The beer maker according to claim 5, further comprising:
an air injection flow path (720) connected to the accommodating apparatus (200) to inject air into the accommodating apparatus (200);
at second air pump (710, 730) connected to the air injection flow path (720) to inject air into the accommodating apparatus (200).

7. The beer maker according to claim 6,
wherein an air injection valve (722) controlling a flow rate of the air supplied to the accommodating apparatus (200) is provided in the air injection flow path (720).

8. The beer maker according to claim 6 or 7, wherein the air injection flow path (720) is connected to the supply flow path (820) to inject air into the accommodating apparatus (200) through the supply flow path (820).

9. The beer maker according to claim 3, wherein the accommodating apparatus (200) includes:
a stopper part (220) having a flow hole (221) communicating with the through-hole (930) and an exhaust hole (222) communicating with the discharge hole (934); and
a storage part (230) connected to the stopper part (220), the storage part (230) having a space in which the wort is accommodated, the storage part (230) having a changeable volume.

10. The beer maker according to claim 9, wherein the accommodating apparatus (200) further includes an injection tube (260) communicating with the flow hole (221), the injection tube (260) extending to the inside of the storage part (230).

## Patentansprüche

1. Bierbraueinrichtung, die Folgendes umfasst:
einen Behälter (100), der eine Öffnung (101) aufweist, wobei der Behälter (100) einen Speicherraum bereitstellt;
eine Aufnahmevorrichtung (200), die durch die Öffnung befestigbar/lösbar im Speicherraum vorgesehen ist, wobei die Aufnahmevorrichtung (200) einen Raum bereitstellt, in dem Würze gespeichert wird;
eine Kapselanbringungskomponente (300), die mit der Aufnahmevorrichtung (200) in Verbindung steht;
einen Wasserzuführungsströmungsweg (810), durch den der Kapselanbringungskomponente (300) Wasser zugeführt wird;
einen Zuführungsströmungsweg (820), durch den Wasser, das in eine Kapsel (400) eingespeist wird, die befestigbar/lösbar in der Kapselanbringungskomponente (300) vorgesehen ist, zusammen mit den Materialien, die in der Kapsel (400) aufgenommen sind, der Aufnahmevorrichtung (200) zugeführt wird;
einen Trinkströmungsweg (860), der vorgesehen ist, um Bier der Aufnahmevorrichtung (200) nach außerhalb des Behälters (100) auszulassen;
einen Auslassströmungsweg (840), durch den Gas, das von der Aufnahmevorrichtung (200) in einem Bierbrauprozess erzeugt wird, ausgelassen wird;
einen Druckbeaufschlagungsströmungsweg (700), der mit dem Behälter (100) verbunden ist; und
eine erste Luftpumpe (710), die konfiguriert ist, die Aufnahmevorrichtung (200) durch Zuführen von Luft zwischen den Behälter (100) und die Aufnahmevorrichtung (200) durch den Druckbeaufschlagungsströmungsweg (700) mit Druck zu beaufschlagen.

2. Bierbraueinrichtung nach Anspruch 1, wobei ein Auslassventil (842), das eine Durchflussmenge des Gases, das aus der Aufnahmevorrichtung (200) ausgelassen wird, steuert, im Auslassströmungsweg (840) vorgesehen ist.

3. Bierbraueinrichtung nach Anspruch 1 oder 2, die ferner einen Dichtungskörper (910) umfasst, der befestigbar/lösbar in der Öffnung (101) vorgesehen ist, um die Öffnung (101) abzudichten,
wobei ein Durchgangsloch (930), das mit dem Zuführungsströmungsweg (820) verbunden ist, und ein Auslassloch (934), das mit dem Auslassströmungsweg (840) verbunden ist, im Dichtungskörper (910) gebildet sind.

4. Bierbraueinrichtung nach einem der vorhergehenden Ansprüche, wobei ein Zuführventil (821), das den Zuführungsströmungsweg (820) öffnet/verschließt, im Zuführungsströmungsweg (820) vorgesehen ist, und/oder
wobei ein Trinkventil (862), das eine Durchflussmenge des Bieres, das aus der Aufnahmevorrichtung (200) ausgelassen wird, steuert, im Trinkströmungsweg (860) vorgesehen ist.

5. Bierbraueinrichtung nach einem der vorhergehenden Ansprüche, wobei ein Druckbeaufschlagungsventil (702), das eine Durchflussmenge der Luft, die dem Behälter (100) zugeführt wird, steuert, im Druckbeaufschlagungsströmungsweg (700) vorgesehen ist.

6. Bierbraueinrichtung nach Anspruch 5, die ferner Folgendes umfasst:
einen Lufteinspeisungsströmungsweg (720), der mit der Aufnahmevorrichtung (200) verbunden ist, um Luft in die Aufnahmevorrichtung (200) einzuspeisen;
eine zweite Luftpumpe (710, 730), die mit dem Lufteinspeisungsströmungsweg (720) verbunden ist, um Luft in die Aufnahmevorrichtung (200) einzuspeisen.

7. Bierbraueinrichtung nach Anspruch 6,
wobei ein Lufteinspeisungsventil (722), das eine Durchflussmenge der Luft, die der Aufnahmevorrichtung (200) zugeführt wird, steuert, im Lufteinspeisungsströmungsweg (720) vorgesehen ist.

8. Bierbraueinrichtung nach Anspruch 6 oder 7, wobei der Lufteinspeisungsströmungsweg (720) mit dem Zuführungsströmungsweg (820) verbunden ist, um Luft durch den Zuführungsströmungsweg (820) in die Aufnahmevorrichtung (200) einzuspeisen.

9. Bierbraueinrichtung nach Anspruch 3, wobei die Aufnahmevorrichtung (200) Folgendes enthält:
eine Stopperkomponente (220), die ein Strömungsloch (221), das mit dem Durchgangsloch (930) in Verbindung steht, und ein Abgasloch (222), das mit dem Auslassloch (934) in Verbindung steht, aufweist; und
eine Speicherkomponente (230), die mit der Stopperkomponente (220) verbunden ist, wobei die Speicherkomponente (230) einen Raum aufweist, in den die Würze aufgenommen wird, wobei die Speicherkomponente (230) ein veränderbares Volumen besitzt.

10. Bierbraueinrichtung nach Anspruch 9, wobei die Aufnahmevorrichtung (200) ferner ein Einspeisungsrohr (260) enthält, das mit dem Strömungsloch (221) in Verbindung steht, wobei sich das Einspeisungsrohr (260) in das Innere der Speicherkomponente (230) erstreckt.

## Revendications

1. Appareil de préparation de bière comportant :
un contenant (100) incluant une ouverture (101), le contenant (100) fournissant un espace de stockage ;
un appareil de réception (200) agencé de façon attachable/détachable dans l'espace de stockage à travers l'ouverture (101), l'appareil de réception (200) fournissant un espace dans lequel du moût est stocké ;
une partie de montage de capsule (300) communiquant avec l'appareil de réception (200) ;
un trajet d'écoulement pour l'alimentation en eau (810) par lequel de l'eau est fournie à la partie de montage de capsule (300) ;
un trajet d'écoulement pour l'alimentation (820) par lequel l'eau introduite dans une capsule (400) agencée de manière attachable/détachable dans la partie de montage de capsule (300) est fournie en association avec les matériaux reçus dans la capsule (400) à l'appareil de réception (200) ;
un trajet d'écoulement de boisson (860) destiné à évacuer la bière de l'appareil de réception (200) vers l'extérieur du contenant (100) ;
un trajet d'écoulement pour l'évacuation (840) par lequel du gaz généré à partir de l'appareil de réception (200) pendant un processus de brassage de bière est évacué ; un trajet d'écoulement pour la pressurisation (700) relié au contenant (100) ; et
une première pompe à air (710) configurée pour pressuriser l'appareil de réception (200) en fournissant de l'air entre le contenant (100) et l'appareil de réception (200) par le trajet d'écoulement pour la pressurisation (700).

2. Appareil de préparation de bière selon la revendication 1, dans lequel une vanne d'évacuation (842) commandant un débit du gaz évacué de l'appareil de réception (200) est agencée dans le trajet d'écoulement pour l'évacuation (840).

3. Appareil de préparation de bière selon la revendication 1 ou 2, comportant en outre un corps d'étanchéité (910) agencé de manière attachable/détachable dans l'ouverture (101) pour sceller l'ouverture (101),
dans lequel un trou traversant (930) relié au trajet d'écoulement pour l'alimentation (820) et un trou d'évacuation (934) relié au trajet d'écoulement pour l'évacuation (840) sont formés dans le corps d'étanchéité (910).

4. Appareil de préparation de bière selon l'une quelconque des revendications précédentes, dans lequel une vanne d'alimentation (821) ouvrant/fermant le trajet d'écoulement pour l'alimentation (820) est agencée dans le trajet d'écoulement pour l'alimentation (820), et/ou
dans lequel une vanne de boisson (862) commandant un débit de la bière évacuée de l'appareil de réception (200) est agencée dans le trajet d'écoulement de boisson (860).

5. Appareil de préparation de bière selon l'une quelconque des revendications précédentes, dans lequel une vanne de pressurisation (702) commandant un débit de l'air fourni au contenant (100) est agencée dans le trajet d'écoulement pour la pressurisation (700).

6. Appareil de préparation de bière selon la revendication 5, comportant en outre : un trajet d'écoulement pour l'injection d'air (720) relié à l'appareil de réception (200) pour injecter de l'air dans l'appareil de réception (200) ;
une seconde pompe à air (710, 730) reliée au trajet d'écoulement d'injection d'air (720) pour injecter de l'air dans l'appareil de réception (200).

7. Appareil de préparation de bière selon la revendication 6,
dans lequel une vanne d'injection d'air (722) commandant un débit de l'air fourni à l'appareil de réception (200) est agencée dans le trajet d'écoulement pour l'injection d'air (720).

8. Appareil de préparation de bière selon la revendication 6 ou 7, dans lequel le trajet d'écoulement pour l'injection d'air (720) est relié au trajet d'écoulement d'alimentation (820) pour injecter de l'air dans l'appareil de réception (200) par le trajet d'écoulement pour l'alimentation (820).

9. Appareil de préparation de bière selon la revendication 3, dans lequel l'appareil de réception (200) inclut :
une partie de butée (220) ayant un trou d'écoulement (221) communiquant avec le trou traversant (930) et un trou d'évacuation (222) communiquant avec le trou d'évacuation (934) ; et
une partie de stockage (230) reliée à la partie de butée (220), la partie de stockage (230) ayant un espace dans lequel du moût est reçu, la partie de stockage (230) ayant un volume variable.

10. Appareil de préparation de bière selon la revendication 9, dans lequel l'appareil de réception (200) inclut en outre un tube d'injection (260) communiquant avec le trou d'écoulement (221), le tube d'injection (260) s'étendant jusqu'à l'intérieur de la partie de stockage (230).
